# EUROPEAN PATENT APPLICATION

(11) **EP 0 559 352 A1**
(43) Date of publication of application: **08.09.1993**
(21) Application number: 93301155.3
(22) Date of filing: 17.02.1993
(51) Int. Cl.: F16B 21/09, B60N 3/04, A44B 21/00

(54) **Trim fastener**

(30) Priority: 06.03.1992 GB 9204867
(71) Applicant: JAGUAR CARS LIMITED, Allesley Coventry CV5 9DR (GB)
(72) Inventor: Lawrence, Nigel Steven, Stivichall, Coventry CV3 6LN (GB)
(74) Representative: Watts, Peter Graham

(57) **Abstract**

A trim fastener (10) has a body portion (11) having an elongate plan section, the base (12) of the body portion having a formation (15, 16, 17) which is adapted to slidingly engage a corresponding formation (45) on a support panel or bracket, a button (35) of corresponding plan section to the body portion (11) is pivotally located on the upper face (27) of the body portion (11), so that it may be rotated relative to the body portion (11) between a first position in which it is aligned with the body portion (11) and a second position in which it extends transverse to the body portion (11).

## Description

The present invention relates to a trim fastener and in particular to a trim fastener for location of, for example carpets in a motor vehicle.

According to one aspect of the present invention a trim fastener is characterised in that a body portion has an elongate plan section, the base of the body portion having a formation which is adapted to slidingly engage a corresponding formation on a support panel or bracket, a button of corresponding plan section to the body portion being pivotally located on the upper face of the body portion, so that it may be rotated relative to the body portion between a first position in which it is aligned with the body portion and a second position in which it extends transverse to the body portion.

In this manner, the trim fastener may be secured to a support panel or bracket by interengagement of the formations provided. A carpet or similar trim panel may then be provided with apertures which will fit over the body portion and button, when the button is aligned with respect to the body portion. The button may then be rotated, so that it is transverse to the body portion, to prevent the carpet or trim panel from being removed from the body portion.

Cam formations may be provided on the body portion and/or the button, to bias the button to its transverse or aligned position.

The formation on the base of the body portion preferably comprises a projection extending from the base of the body portion, the projection having a laterally extending tongue formation spaced from the body portion, the tongue formation being narrower than the projection. The projection, between the base of the body portion and the tongue, is recessed on opposite sides to the width of the tongue. The projection and tongue fit through a keyhole aperture in the support panel or bracket, so that upon movement of the fastener towards the narrower end of the keyhole aperture, the tongue will engage the underside of the support panel or bracket and the edges of the narrower part of the keyhole aperture will engage the recesses in the projection. A resilient tab may be provided on the base of the fastener to engage the wider end of the keyhole aperture to retain the fastener in position.

An embodiment of the invention is now described, by way of example only, with reference to the accompanying drawings, in which:-
Figure 1 is a part sectional side elevation of a trim fastener in accordance with the present invention;
Figure 2 is a sectional plan view of the trim fastener illustrated in Figure 1;
Figure 3 is an end elevation of the trim fastener illustrated in Figure 1, with the button turned through 90^{o}; and
Figure 4 illustrates an aperature in a support panel for location of the trim fastener illustrated in Figure 1.

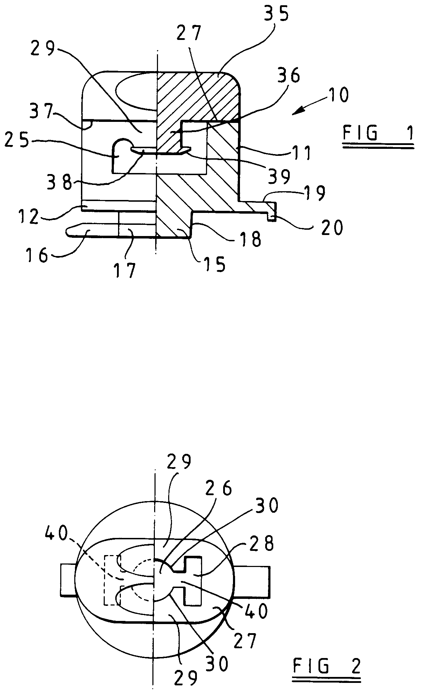

The trim fastener 10 illustrated in Figures 1 to 3 comprises a body portion 11 of oval plan section, with a circular base 12.

A circular projection 15 extends downwardly from the centre of base 12. A tongue formation 16 extends parallel to and spaced from the base 12, from the end of projection 15. The tongue formation 16 is narrower than the projection 15. The projection 15 between the tongue formation 16 and base 12, is recessed on either side parallel to the tongue formation 16, to form a pair of lip formations 17 which extend laterally from the tongue formation 16. A flat 18 is provided on the side of the projection 15 remote from tongue 16. A flexible tab 19 extends from the base 12 in the opposite direction to the tongue formation 16. The end of tab 19 remote from the base 12 has a downwardly extending lip formation 20.

An aperture 25 extends through the body portion 11 from one longitudinal edge to the other. A circular aperture 26 extends centrally from the upper face 27 of body member 11 to the aperture 25 and a pair of T-shaped apertures 28 arranged diametrically of the circular aperture 26 on the longitudinal axis of body member 11 extend from the upper face 27 of body member 11 to the aperture 25. The apertures 25, 26 and 28, thereby form two resilient bridge members 29 each bridge member 29 defining a part circular bearing formation 30.

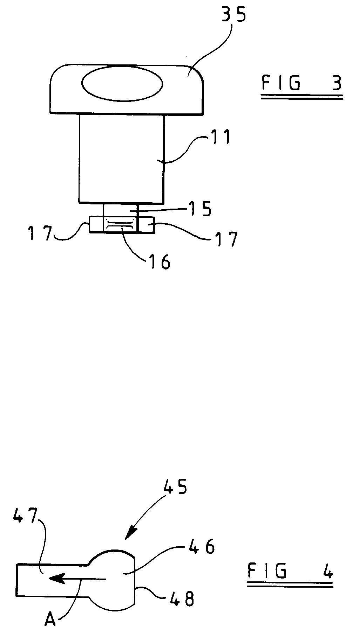

A button 35 having the same plan section as body portion 11 has a circular projection 36 extending downwardly from the lower face 37 thereof. The circular projection 36 is terminated by a flange formation 38 the outer edge 39 of which is chamfered to provide a lead-in formation. The projection 36 is the same diameter as aperture 26 so that button 35 may be pivotally mounted with respect to the body portion 11 by inserting projection 36 through the aperture 26, the flange formation 38 engaging on the underside of bearing formations 30 while the lower face 37 of button 35 engages the upper face 27 of body portion 11. The button 35 is thereby rotatable with respect to the body portion 11 from a position in which it is aligned with the body portion 11 (as illustrated in Figure 2) to a position in which it is transverse to the body portion 11 (as illustrated in Figure 3). A small dimple (not shown) may be provided on projection 36 such that when the button 35 is in its transverse position, the projection will be located in one of the gaps 40 formed between bearing formations 29, thereby locating the button 35 in the transverse position.

The trim fastener 10 illustrated in Figures 1 to 3 is located on a support panel or bracket by means of a keyhole aperture 45, as illustrated in Figure 4. The keyhole aperture 45 has a circular portion 46 corresponding to the circular projection 15 of body portion 11 and a rectangular portion 47 corresponding to the tongue formation 16. The projection 15 and tongue 16 may thus be located in the keyhole aperture, tab 19 being deflected so that the base 12 of body portion 11 engages the upper surface of the support panel or bracket. The fastener 10 may then be moved in the direction of arrow A in Figure 4, so that the tongue formation 16 engages the underside of the support panel or bracket and the edges of the support panel or bracket defining the rectangular portion 47 of aperture 45, engage the recessed portion of the projection 15. When the leading edge of the projection 15 engages the end of the rectangular portion 47 of aperture 45, the tab 19 clears the support panel or bracket so that lip 20 will engage the straight edge of the circular portion 46 of aperture 45, thereby preventing inadvertent disengagement of the trim fastener 10.

With the trim fastener 10 in position, and the button 35 aligned with the body portion 11, a carpet or similar trim panel with apertures corresponding to the plan section of the button 35 and body portion 11 may then be located over the body portion 11 and button 35; and the button 35 may then be rotated to its transverse position to retain the carpet or trim panel in position. Eyelets may be provided to define the apertures in the carpet or similar trim panel. The eyelets may define a recessed aperture such that when the carpet or similar trim panel is located over the body portion 11 of the trim fastener 10, the button 35 will be below the upper surface of the carpet or trim panel, the recess in the eyelet being of sufficient size to permit the button 35 to be rotated from its aligned to its transverse position. It will be appreciated, that the height of the body portion 11 of the trim fastener 10, will be selected to accommodate the thickness of carpet or trim panel. Alternatively, the trim fastener 10 may be designed to accommodate several layers of trim.

The body portion 11 and button 35 of the trim fasteners in accordance with the present invention are preferably made from plastics materials such as nylon.

## Claims

1. A trim fastener (10) characterised in that a body portion (11) has an elongate plan section, the base (12) of the body portion (11) having a formation (15, 16, 17) which is adapted to slidingly engage a corresponding formation (45) on a support panel or bracket, a button (35) of corresponding plan section to the body portion (11) being pivotally located on the upper face (27) of the body portion (11), so that it may be rotated relative to the body portion (11) between a first position in which it is aligned with the body portion (11) and a second position in which it extends transverse to the body portion (11).

2. A trim fastener (10) according to Claim 1 characterised in that a projection (15) extends from the base (12) of the body portion (11), the projection (15) having a tongue formation (16) extending laterally parallel to but spaced from the body portion (11), the tongue formation (16) being narrower than the projection (15); the projection (15), between the base (12) of the body portion (11) and the tongue formation (16), being recessed on opposite sides to the width of the tongue formation (16); an aperture (45) being provided in the support panel or bracket, the aperture (45) having a first portion (46) corresponding in area to the cross-sectional area of the projection (15) and a second rectangular portion (47) the width of which is greater than the tongue formation (16) but narrower than the projection (15), so that the projection (15) and tongue formation (16) will locate through the aperture (45) and the base (12) of the body portion (11) engage the surface of the support panel or bracket and the trim fastener (10) may be moved towards the narrower end of the keyhole aperture (45), so that the tongue formation (16) will engage the underside of the support panel or bracket and the edges of the rectangular portion (47) of the keyhole aperture (45) will engage the recesses in the projection (15).

3. A trim fastener (10) according to Claim 2 characterised in that a resilient tab (19, 20) is provided on the body portion (11) of the trim fastener (10), the tab (19, 20) extending below the base (12) of the body portion (11) so that when the projection (15) and tongue formation (16) are engaged in the keyhole aperture (45) in the support panel or bracket, the tab (19, 20) will be deflected permitting the base (12) of the body portion (11) to engage the surface of the support panel or bracket and when the trim fastener (10) is moved towards the narrower end of the keyhole aperture (45) the tab (19, 20) will engage the other end of the aperture (45) to retain the trim fastener (10) in position.

4. A trim fastener (10) according to any one of the preceding claims characterised in that an aperture (25) is provided transversely through the body portion (11), a circular aperture (26) being provided from the upper surface (27) of the body portion (11) to the transverse aperture (25) and a pair of T-shaped apertures (28) being arranged diametrically of the circular aperture (27) on the longitudinal axis of the body portion (11) to define two resilient bridge members (29), each bridge member (29) defining a part circular bearing formation (30); the button (35) having a circular projection (36) for engagement of the bearing formations (30) by which the button (35) is rotatably mounted with respect to the body portion (11).

5. A trim fastener according to Claim 4 characterised in that the projection (36) on the button (35) has a flange formation (38) which engages the underside of the bearing formations (30) on the body portion (11).

6. A trim fastener according to Claim 4 or 5 characterised in that a dimple is provided on the projection (36) on the button (35), the dimple being arranged to locate in the gap (40) defined between the bearing formations (30) on the body portion (11), when the button (35) is in its transverse position.

7. A trim fastener according to any one of the preceding claims characterised in that the body portion (11) and button (35) have an oval plan section.

8. A trim fastener according to any one of the preceding claims characterised in that the body portion (11) and button (35) are made of plastics material.
